# EUROPEAN PATENT SPECIFICATION

(11) **EP 3 472 501 B1**
(45) Date of publication and mention of the grant of the patent: **15.12.2021**
(21) Application number: 17702609.3
(22) Date of filing: 31.01.2017
(51) Int. Cl.: F16L 3/01, A01G 25/00, B65H 75/36

(54) **HOSE BOX**
SCHLAUCHKASTEN
BOÎTIER DE TUYAU

(30) Priority: 15.06.2016 DE 102016007245
(43) Date of publication of application: 24.04.2019
(73) Proprietor: Husqvarna AB, 561 82 Huskvarna (SE)
(72) Inventor: RENNER, Thomas, 89079 Ulm (DE)
(74) Representative: Finkele, Rolf
(86) International application number: PCT/EP2017/052011
(87) International publication number: WO 2017/215792

(56) References cited:
- WO-A1-02/33302
- US-A- 3 664 342
- US-A- 5 011 034
- US-A1- 2003 150 963
- US-A1- 2003 205 646
- US-A1- 2006 226 301

## Description

The present invention relates generally to the field of hose boxes. More specifically, the present document discloses a hose box for storing a spiral hose.

### BACKGROUND OF THE INVENTION

Different solutions are known for storing hoses, specifically water hoses. For example, hose reels are known which comprise a frame including the reel for coiling the hose. In addition, hose reels are known which have to be attached to a wall. However, the installation of such hose reels causes undesired damages at the wall.

Spiral hoses may be preferred hoses in areas with limited storage space. However, said spiral hoses comprise a limited action radius and cannot be used in environments in which the water tap is far away from the objects to be irrigated.

US 2003/205646 A1 and WO 02/33302 A1 describe hose boxes for such spiral hoses that enable easy access for usage. The hose boxes have a hole at its bottom allow the entry section the spiral hose to move out and to be connected to a water source. Both the boxes are provided with attachable fixing portions adopted to mount the boxes on a wall at a good distance above the ground. In contrast the grooves shown with the base portion of the hose box shown with the US '646 reference serve to buckle the nozzle fixed to the spiral hose at its water outlet to position that nozzle. This is to avoid it hanging loose in an undefined position. There seems to be no provision to provide a passage resulting in a lateral protrusion also the spiral hose's entry section. In contrary as the hose box base body with the US '646 reference is freely accessible thus there is no need for it.

### SUMMARY OF THE INVENTION

It is an objective of the embodiments of the present invention to provide a hose box for storing a spiral hose which provides a simple removal and storing of a spiral hose. The objective is solved by the features of the independent claim. Preferred embodiments are given in the dependent claims. If not explicitly indicated otherwise, embodiments of the invention can be freely combined with each other.

The invention relates to a hose box adapted to receive a spiral hose. The hose box comprises:
- a base body, specifically a tubular base body, confining a cavity for receiving the spiral hose and comprising a lower base body portion providing a support for the spiral hose received in the base body, the lower base body portion comprising a passage for the spiral hose; and
- fixing means adapted to fix the hose box above the ground.

Said hose box is advantageous because the tubular base body can be attached to the ground or to a vertical fixing element (e.g. house wall, railings etc.) with minimal installation effort and provides a space-saving storage for said spiral hose.

According to embodiments, the said fixing means may comprise an elastic fixing portion providing a flexible coupling of the base body with a fixing area. Thereby, the base body can be tilt towards the ground when pulling the spiral hose out of the base body. Particularly, the base body may even touch on the ground when the spiral hose is pulled along the ground. Thereby the forces for pulling the spiral hose out of the base body are significantly reduced.

According to other embodiments, the base body comprises one or more openings for installing the base body at a wall, railings etc. Said openings may be bores or screw holes. Alternatively, openings may be provided through which cable ties or Velcro fasteners are pulled through in order to fix the base body at a post or column.

According to embodiments, the elastic fixing portion comprises an elastically deformable coupling element, specifically a spring. Hereby the elastically deformable coupling element could for example be made out of metal or plastics. In one embodiment the size of that coupling element is smaller than the tubular base body. In another embodiment the coupling element could well measure a circumference that is approximately the same than that of the base body. This is in particular advantageous with coupling elements made out of plastics as this shape helps to improve stability.

Said elastically deformable coupling element may elastically couple the base body with an installation surface. Thereby a flexible arrangement of the base body at the ground or installation surface is obtained which eases the pulling-out of the spiral hose and lowers the load on the fixing element providing a fixing of the base portion at the installation surface because the length of the lever is reduced.

According to embodiments, the elastic fixing portion provides a passage for the spiral hose. More specifically, a portion of the spiral hose may be provided through the interior of the elastically deformable coupling element thereby realizing a space-saving feed-through of the hose towards the installation surface.

Said fixing means further comprise a base portion for fixing the hose box at a fixing area. Said base portion may comprise a plate-like shape. Preferably, the base portion may be a multifunctional fixing portion providing the possibility of directly mounting the base portion at an installation surface (e.g. by screwing the base portion directly on a installation surface) or by attaching the base portion on an anchor element, e.g. a ground anchor.

The base portion is coupled with the lower base body portion by means of said elastically deformable coupling element, specifically by means of said spring. Thereby a secure coupling of the hose box at the installation surface can be obtained and the base body is elastically mounted at said installation surface due to providing said elastically deformable coupling element between the base body and the base portion.

According to embodiments, the lower base body portion comprises a thread adapted to receive the loops of the spring of the elastic fixing portion. For example, said spring may be a tension spring comprising multiple coils. The thread provided at the lower base body portion may be configured according to said spring coils in order to be able to screw the spring in or onto the lower base body portion. For example, the lower base body portion may comprise a recess or cavity including a female thread for receiving the spring. In other embodiments, the lower base body portion may comprise a protrusion with a male thread on which the spring can be screwed on.

According to embodiments, the base portion comprises a coupling portion for coupling the base portion with said elastically deformable coupling element, specifically with said spring. Said coupling portion may be formed by a recess or cavity included in the base portion. Alternatively, the coupling portion may comprise a protrusion adapted to receive said elastically deformable coupling element.

According to embodiments, the coupling portion comprises a thread for receiving the loops of the spring of the elastic fixing portion. The thread provided at the base portion may be configured according to the spring coils in order to be able screw the spring in or onto the base portion. For example, the base portion may comprise a recess or cavity including a female thread for receiving the spring. In other embodiments, the base portion may comprise a protrusion with a male thread on which the spring can be screwed on.

The base portion comprises openings or boreholes for receiving fixing elements in order to fixly arrange the base portion at a fixing area. Said fixing elements may be screws, nails etc. The openings/ boreholes may be circumferentially arranged around the centre of the base portion. Alternatively, the base portion may be adapted to be glued to an installation surface.

According to embodiments, the base portion is adapted to be detachably connected with an anchor element, specifically a ground anchor or a spike. Said anchor element may be adapted to be inserted or screwed into the ground in order to fix the hose box in a lawn area. Said detachable connection between the anchor element and the base portion may comprise a bayonet joint or a threaded connection in order to couple the base portion at the anchor element. Due to the detachable connection, the hose box can be easily uninstalled, for example, for lawn mowing or during winter.

The base portion comprises the passage for the spiral hose for coupling the spiral hose to a water tap, the passage being adapted such that the spiral hose or an end portion of the spiral hose protrudes laterally, specifically radially from the base portion. For example, a hose connector may be provided at the base portion in order to couple the spiral hose with the water hose for coupling the spiral hose with the water tap. Alternatively, the spiral hose may not end in the area of the base portion but may protrude by a certain length from the base portion (e.g. 0.5m, 0.75m, 1m, 1.25m, 1.5m) in order to directly couple the spiral hose with the water tap.

According to embodiments, the elastic fixing portion comprises restoring forces such that in case that no external forces are applied, the longitudinal axis of the base body is arranged in a vertical or essentially a vertical direction. In other words, the elastic fixing portion is adapted to place the base body of the hose box in an upright position. Due to the removal position at the top of the hose box, a comfortable and ergonomic removal of the spiral hose is possible.

According to embodiments, the elastic fixing portion comprises restoring forces such that in case of pulling the spiral hose out of the base body, the longitudinal axis of the base body is displaced in a tilted position or in a horizontal or essentially horizontal position. So, depending on the pulling direction of the spiral hose, the base body is inclined towards said pulling direction. Due to the elastic coupling of the base body with the base portion, the forces applied to the coupling means connecting the base portion with the installation surface (screws, nails, anchor element etc.) are reduced.

According to embodiments, the height of the base body in a direction parallel to the longitudinal axis is greater, specifically at least two or three times greater than the dimension of the base body crosswise to the longitudinal axis. Thereby, the spiral hose is stored in an upright position and can be pulled out in a height which ensures an ergonomic removal of the spiral hose.

According to embodiments, the base body and the base portion may be formed as one-piece elements. For example, the base body and the base portion may be single-piece plastic elements and may be manufactured by injection molding. The spring may be made of metal or plastic.

The term "essentially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, as defined in the appended claims, including its particular features and advantages, will be readily understood from the following detailed description and the accompanying drawings, in which:
- Fig. 1: illustrates a lateral view of a hose box not comprising a base portion;
- Fig. 2: illustrates a lateral view of a hose box according to an embodiment according to the invention;
- Fig. 3: illustrates the hose box according to said embodiment with an anchor element attached to the base portion;
- Fig. 4: illustrates the hose box according to said embodiment with a spiral hose pulled out of the hose box;
- Fig. 5: illustrates the hose box according to said embodiment wherein the base portion is inclined due to pulling the spiral hose out of the hose box;
- Fig. 6: illustrates a cross-sectional view of the hose box according to said embodiment with an inclined base body;
- Fig. 7: illustrates a cross-sectional view of the lower part of the hose box according to said embodiment with an anchor element attached to the base portion; and
- Fig. 8: illustrates a hose box set including a spiral hose, a sprayer, a hose connector and an anchor element in a ready-for-sale arrangement.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

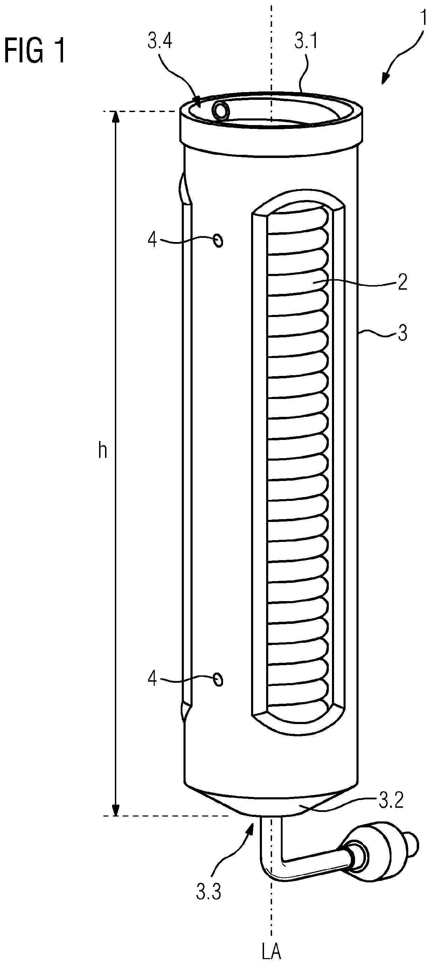

Fig. 1 illustrates a hose box 1 not comprising a base portion in a lateral view. The hose box 1 comprises a base body 3 for receiving a spiral hose 2. The base body 3 comprises a tubular, elongated shape. More in detail, the base body 3 comprises a cavity 3.1 adapted to receive a spiral hose 2. The base body 3 may comprise a cylindrical or essentially cylindrical sidewall portion laterally confining said cavity 3.1. At the top of the base body 3, an opening 3.4 is provided for inserting the spiral hose 2 into the base body 3, respectively, pulling the spiral hose 2 out of the base body 3. A spiral hose 2 according to the present invention may be a hose which comprises multiple loops in case that no external forces are applied to the hose in order 8 to elongate the hose. In addition, said spiral hose 2 may be adapted to automatically coil back into said spiral shape after elongating the hose during usage. Thus, no coiling of the hose is necessary but the spiral hose 2 automatically runs back into the base body 3 due to the residual stress within the spiral hose 2. A spray head 2.1 coupled to the spiral hose 2 may be stored within the cavity 3.1 provided in the base body 3 or may be stored by loosely hanging outside at the base body 3.

Opposite to the opening 3.4 of the base body 3 a lower base body portion 3.2 is provided. Said lower base body portion 3.2 provides a support for the spiral hose 2 received within the cavity 3.1 of the base body 3. For example, the lower base body portion 3.2 may comprise a planar shape or may be funnel-shaped. In the centre of the lower base body portion 3.2, a passage 3.3 for the spiral hose 2 is provided. Said passage 3.3 is adapted to provide a feed through for the spiral hose 2 such that the spiral hose 2 passes from the interior of the cavity 3.1 outwardly. The lower base body portion 3.2 may also comprise a water drain hole in order to avoid an accumulation of water within the cavity 3.1. Said water drain hole may be provided by the passage 3.3 or by a separate opening within the lower base body portion 3.2.

In order to fix the base body 3 above the ground, fixing means 4 are provided. In the present embodiment, said fixing means 4 are formed by one or more openings or boreholes which are provided at the cylindrical sidewall of the base body 3. Thereby the hose box can be fixed at a wall, balcony railing etc. by screwing. In addition, the hose box may be adapted to be fixed at a tree, railing etc. by means of cable ties, Velcro fastener etc.

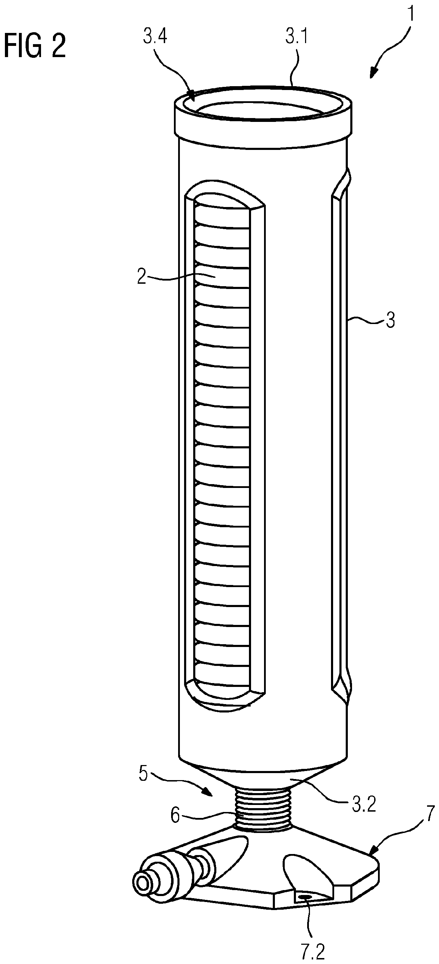

Fig. 2 to 6 show further embodiments of the hose box 1. The base body 3 and the spiral hose 2 may be configured as described before. Therefore, with respect to the features of the spiral hose 2 and the base body 3, reference is made to the embodiment described before.

For fixing the base body 3 at a fixing area 4, for example, ground or an installation surface like a terrace floor, the hose box 1 comprises an elastic fixing portion 5. Said elastic fixing portion 5 comprises a base portion 7 and an elastically deformable coupling element 6. The base portion 7 may be a plate- or disk-shaped element which provides at its lower end a contact surface adapted to mount the hose box at a fixing area, for example, ground, terrace floor or any other installation surface. Opposite to the contact surface, the base portion is coupled with said elastically deformable coupling element 6 which provides a coupling between the base body 3 and the base portion 7. The elastically deformable coupling element 6 may be any element which shows elastic material properties and which comprises restoring forces such that the elastic fixing portion 5 returns into its initial position after deformation. More in detail, the elastic fixing portion 5 may be a spring, specifically a coil spring or any other elastic component.

As shown in Fig. 2, the longitudinal axis LA of the base body 3 is arranged perpendicular or essentially perpendicular to the contact surface of the base portion 7 in case that no external forces are applied to the base body 3. More in detail, the longitudinal axis LA of the base body may be arranged vertically in case that no external forces are applied to the base body 3. Due to upper-mentioned elastic fixing portion 5, the base body 3, respectively, the hose box 1 comprises self up-lifting properties, i.e. after displacing the base body 3 from its vertical (upright) orientation into a tilted position, the base body 3 may automatically return into said vertical position.

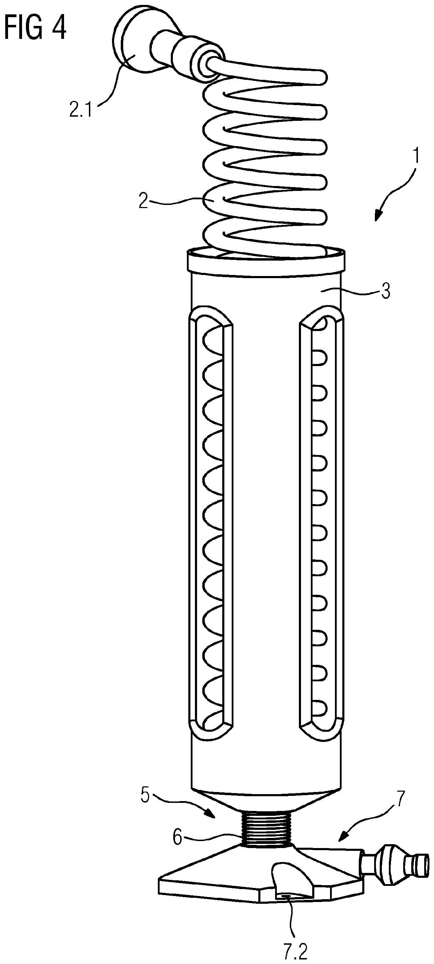

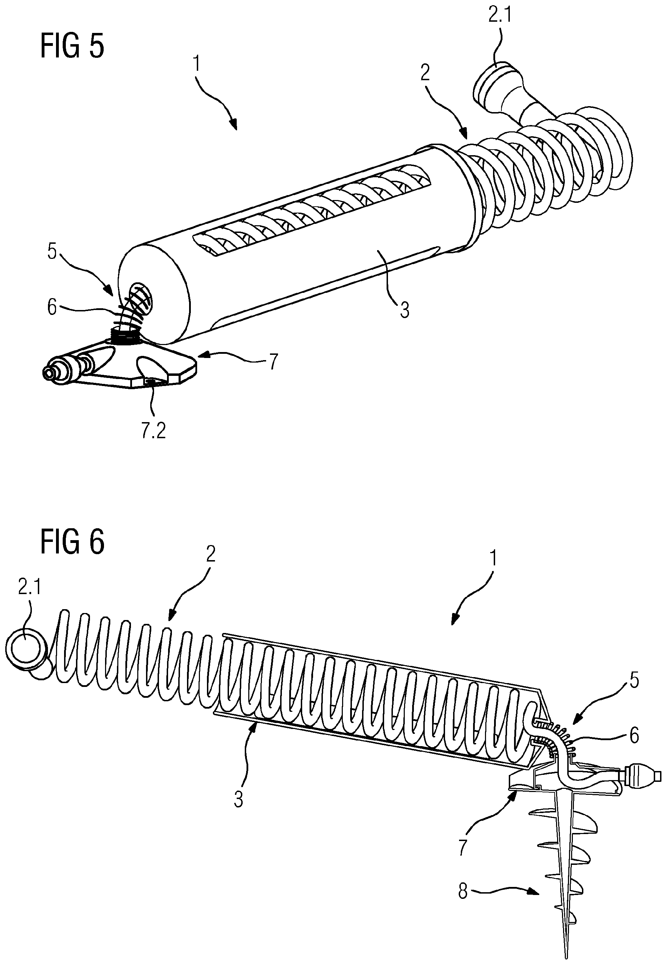

As shown in Fig. 4 to 6, the spiral hose 2 can be pulled out of the base body 3 at the opening 3.4. Due to said pulling forces applied to the spiral hose 2, the base body 3 is displaced from its upright position (fig. 4) into an inclined position (fig. 5 and 6), i.e. the base body 3 of the hose box 1 is adapted to be inclined in the direction in which the spiral hose 2 is pulled.

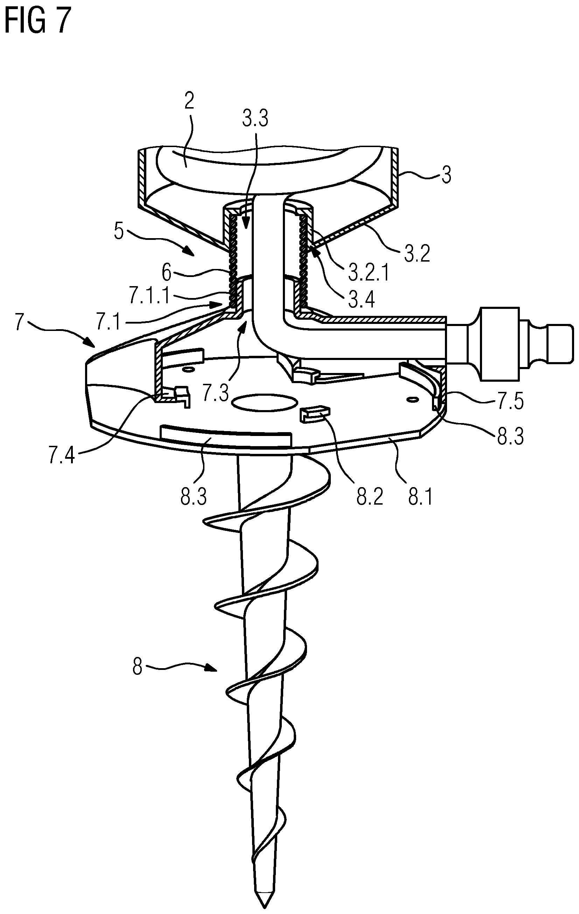

As shown in Fig. 6 and 7, an end portion of the spiral hose 2 is fed through a passage provided within the elastic deformable coupling element 6, specifically, through the interior of the spring. In other words, the elastic deformable coupling element 6 and the spiral hose portion provided within the elastic deformable coupling element 6 provides a deformable water-bearing coupling between the base body 3 and the base portion 7. After passing the elastic deformable coupling element 6, the spiral hose 2 is laterally fed through the wall of the base portion 7. In other words, in the area of the base portion 7, the spiral hose 2 is bent by an angle of 90° or essentially 90°. The spiral hose 2, specifically its free end may protrude laterally at said base portion 7 in order to enable an overground coupling of the spiral hose 2 with a water inlet. In other words, the spiral hose 2 may protrude radially at said base portion 7.

According to an example embodiment, a quick-coupling element may be provided at the base portion 7 in order to provide a coupling interface for a hose connector of a water hose. According to other embodiments, the hose protruding at the base portion 7 may not directly end in close proximity to the base portion 7 but may protrude from said base portion 7 for a certain length in order to enable a direct coupling of the free end of spiral hose 2 with a water tap. For example, the hose may protrude from the base portion 7 with a length in the area of 0.5m to 2m, specifically, 0.75m, 1m, 1.25m, 1.5m or 1.75m.

The base portion 7 may comprise one or more bores or openings 7.2 for fixing the base portion 7 at an installation surface. For example, multiple bores or openings 7.2 may be circumferentially distributed around the centre of the base portion 7. Through said bores or openings 7.2, fixing elements, e.g. screws can be provided in order to fix the base portion 7 and thereby the hose box 1 at the installation surface.

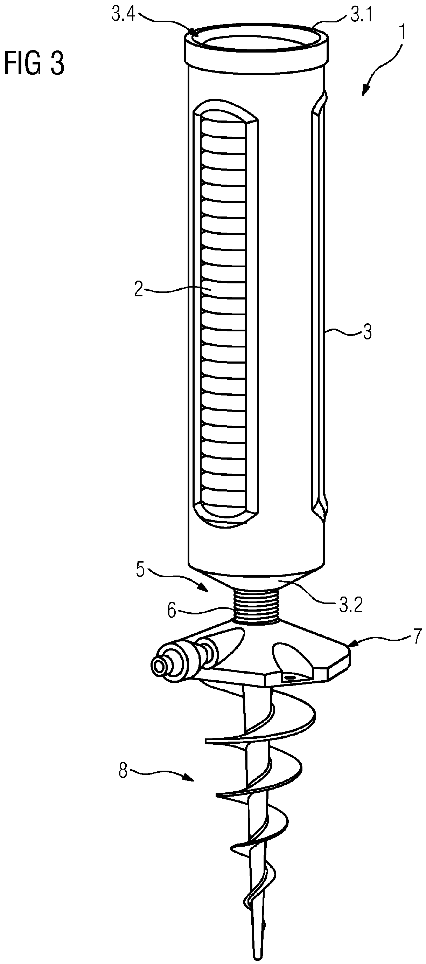

Referring to Fig. 3, 6 and 7, the base portion 7 may be adapted to be coupled with an anchor element 8 for fixing the hose box 1 at the ground. The anchor element 8 may be a ground anchor configured as ground spike with a tapered spike or configured as ground screw comprising a thread for screwing the anchor element 8 into the ground. Thereby it is possible to directly fix the hose box 1 in the ground, for example, in a lawn area. The anchor element 8 may be made of any rigid material, specifically metal or plastic.

As shown in Fig. 7, the base portion 7 may be adapted to be detachably mounted at the anchor element 8. More in detail, the base portion 7 and the anchor element 8 may comprise means for implementing a bayonet joint between the base portion 7 and the anchor element 8. For example, the anchor element 8 may comprise a plate-shaped connection portion 8.1 for coupling the base portion 7 at the anchor element 8. At said connection portion 8.1 fixing means are provided which interact with corresponding fixing means at the base portion 7. In the present embodiment, the fixing means provided at the anchor element 8 are hook-shaped portions 8.2 which protrude upwardly. Said hook-shaped portions are adapted to receive planar fixing portions 8.2. In case that the planar fixing portions 7.4 engage into the hook-shaped portions 8.2, the hose box 1 is fixed at the anchor element 8. The coupling between the base portion 7 and the anchor element 8 may be realized by rotating the base portion 7 and the anchor element 8 against each other.

In order to ease the alignment of the base portion 7 and the anchor element 8, the connection portion 8.1 may provide one or more wall portions 8.3. Said wall portions 8.3 may interact with a lateral wall portion 7.5 of the base portion 7. More in detail, the wall portions 8.3 may rest against the lateral wall portion 7.5 thereby providing a guidance for putting the base portion 7 on the connection portion 8.1 and rotating the base portion 7 against the anchor element 8.

However, apart from the upper-described bayonet joint, also other coupling means may be possible, for example, a screw connection using corresponding threads at the base portion 7 and the anchor element 8.

Fig. 7 shows in closer detail the elastic fixing portion 5 using an elastic deformable coupling element 5 (e.g. a spring) coupling the tubular base body 3 and the base portion 7. For fixing the elastic deformable coupling element 5 at the base body 3, the base body 3 comprises at its lower base body portion 3.2 a coupling portion 7.1. Said coupling portion 7.1 may comprise a thread 7.1.1 which is adapted to the coils of the spring. For example, the coupling portion 7.1 may be a recess or cavity in which a free end of the spring is received. For coupling the spring with the coupling portion 7.1, said spring may be screwed into the female thread 7.1.1 within said recess or cavity. Alternatively, the coupling portion 7.1 may be a protrusion provided at the lower base body portion 3.2. Said protrusion may comprise a male thread in order to screw the protrusion into the interior of the spring.

Similarly, the coupling of the elastic deformable coupling element 5 with the base portion 7 is obtained by a coupling portion 7.1 provided at the base portion 7. In the present embodiment, the coupling portion 7.1 comprises a protrusion. The elastic deformable coupling element 5 is coupled with the protrusion by placing the elastic deformable coupling element 5 over said protrusion. More in detail, the elastic deformable coupling element 5 may be a spring and the coupling portion 7.1 may comprise a male thread for receiving the coils of the spring. Thereby, the spring can be screwed onto the coupling portion 7.1. Alternatively, the base portion 7 may comprise a recess or cavity for receiving the free end of the elastic deformable coupling element 5. For example, the recess or cavity may comprise a female thread in which a spring can be screwed.

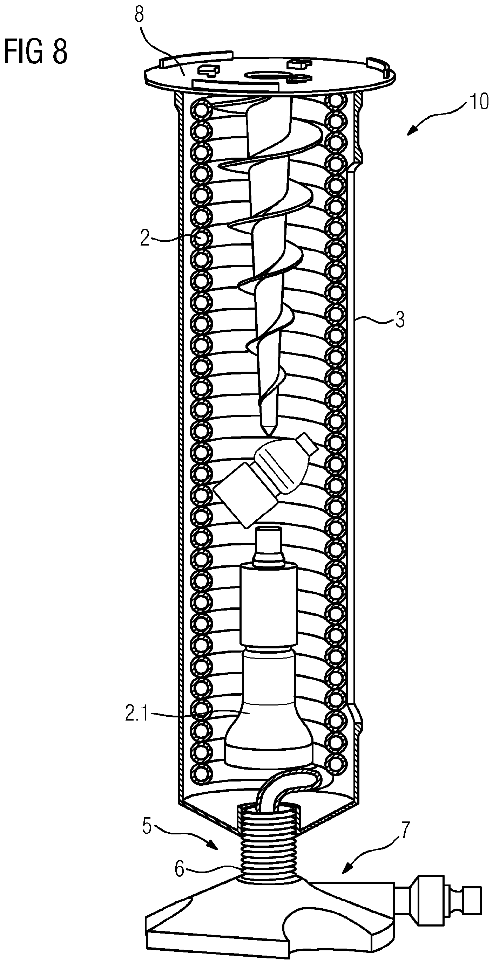

Fig. 8 shows a set 10 comprising a hose box 1 as described before together with a spiral hose 2 and an anchor element 8 for fixing the hose box 1 in the ground. The set 10 may further comprise a spray head and/or a hose connector for coupling a water hose with the hose connection portion provided at the base portion 7. Due to the tubular shape of the base body 3, the components of the set 10 can be stored in the interior of the base body 3. The anchor element 8, specifically the plate-shaped connection portion 8.1 of the anchor element 8 may be used to close the base body 3 in the area of the opening 3.4. In other words, the plate-shaped connection portion 8.1 provides a cover at the top of the hose box 1. The ground spike or ground thread may protrude into the cavity 3.1 of the base body 3. Thereby, the packaging size and the amount of packaging material can be significantly reduced.

The proposed hose box 1 comprises a slim design. More in detail, the height h of the base body 3 may be larger than the diameter of the cavity 3.1. For example, the height h of the base body 3 may be at least two or three times greater than the diameter of the cavity 3.1. Due to the significant height h of the hose box 1 (e.g. 60cm between the lower end of the base portion 7 and the top portion of the base body 3) a comfortable and ergonomic removal of the spiral hose 2, specifically the spray head 2.1 arranged at the spiral hose 2 can be obtained. In addition, due to the arrangement of the spray head 2.1 close to the upper portion of the base body 3 (close to the opening 3.4), the spray head 2.1 remains clean because it does not touch the ground.

It should be noted that the description and drawings merely illustrate the principles of the proposed hose box.

### List of reference numerals

- 1: hose box
- 2: spiral hose
- 2.1: spray head
- 3: base body
- 3.1: cavity
- 3.2: lower base body portion
- 3.2.1: thread
- 3.3: passage
- 3.4: opening
- 4: fixing means
- 5: elastic fixing portion
- 6: elastic deformable coupling element
- 7: base portion
- 7.1: coupling portion
- 7.1.1: thread
- 7.2: opening
- 7.3: passage
- 7.4: planar fixing portion
- 7.5: lateral wall portion
- 8: anchor element
- 8.1: connection portion
- 8.2: hook-shaped portion
- 8.3: wall portion

- 10: set

- h: height
- LA: longitudinal axis

## Claims

1. Hose box adapted to receive a spiral hose (2), the hose box comprising:
- a base body (3), specifically a tubular base body, and confining a cavity (3.1) for receiving the spiral hose (2) and comprising a lower base body portion (3.2) providing a support for the spiral hose (2) received in the base body (3), the lower base body portion (3.2) comprising a passage (3.3) for the spiral hose (2); and
- fixing means (4) adapted to fix the hose box above the ground comprising a base portion (7) for fixing the hose box at a fixing area, wherein the base portion (7) comprises openings (7.2) for receiving fixing elements in order to fixly arrange the base portion (7) at a fixing area,
whereby the base portion (7) comprises a passage (7.3) for the spiral hose (2) for coupling the spiral hose (2) to a water tap, the passage (7.3) being adapted such that the spiral hose (2) or an end portion of the spiral hose (2) protrudes laterally, specifically radially from the base portion (7) **characterized in that**
the base portion (7) is coupled with the lower base body portion (3.2) by means of an elastically deformable coupling element (6).

2. Hose box according to claim 1, wherein said fixing means (4) comprise an elastic fixing portion (5) providing a flexible coupling of the base body (3) with a fixing area.

3. Hose box according to claim 2, wherein the elastic fixing portion (5) provides a passage the spiral hose (2).

4. Hose box according to claim 2 or 3, wherein said elastic fixing portion (5) comprises an elastically deformable coupling element (6).

5. Hose box according to claim 4, wherein the base portion (7) is coupled with the lower base body portion (3.2) by means of said elastically deformable coupling element (6).

6. Hose box according to anyone of the preceding claims 3 to 5, wherein the lower base body portion (3.2) comprises a thread (3.2.1) adapted to receive the loops ofa spring (6) of the elastic fixing portion (5).

7. Hose box according to anyone of claims 4 or 6, wherein the base portion (7) comprises a coupling portion (7.1) for coupling the base portion (7) with said elastically deformable coupling element (6).

8. Hose box according to claim 7, wherein the coupling portion (7.1) comprises a thread (7.1.1) for receiving the loops of a spring of the elastic fixing portion (5).

9. Hose box according to anyone of the preceding claims, wherein the base portion (7) is adapted to be detachably connected with an anchor element (8), specifically a ground anchor or a spike.

10. Hose box according to anyone of the claims 2 to 9, wherein the elastic fixing portion (5) comprises restoring forces such that in case that no external forces are applied, the longitudinal axis (LA) of the base body (3) is arranged in a vertical or essentially a vertical direction.

11. Hose box according to anyone of the claims 2 to 10, wherein the elastic fixing portion (5) comprises restoring forces such that in case of pulling the spiral hose (2) out of the base body (3), the longitudinal axis (LA) of the base body (3) is displaced in a tilted position or in a horizontal or essentially horizontal position.

12. Hose box according to anyone of the preceding claims, wherein the height (h) of the base body (3) in a direction parallel to the longitudinal axis (LA) is greater, specifically at least two or three times greater than the dimension of the base body (3) crosswise to the longitudinal axis (LA).

13. Hose box according to anyone of the preceding claims, wherein a hose connector is provided at the base portion (7) for coupling the spiral hose (2) with the water tap.

## Patentansprüche

1. Schlauchkasten zur Aufnahme eines Spiralschlauchs (2), wobei der Schlauchkasten umfasst:
einen Grundkörper (3), insbesondere einen rohrförmigen Grundkörper, der einen Hohlraum (3.1) zur Aufnahme des Spiralschlauchs (2) einschließt und einen unteren Grundkörperabschnitt (3.2) aufweist, der eine Abstützung für den im Grundkörper (3) aufgenommenen Spiralschlauch (2) bildet, wobei der untere Grundkörperabschnitt (3.2) eine Durchführung (3.3) für den Spiralschlauch (2) aufweist; und
Befestigungsmittel (4) zum Befestigen des Schlauchkastens über dem Boden, umfassend einen Basisabschnitt (7) zum Fixieren des Schlauchkastens an einem Befestigungsbereich, wobei der Basisabschnitt (7) Öffnungen (7.2) zur Aufnahme von Befestigungselementen aufweist, um den Basisabschnitt (7) an einem Befestigungsbereich fest anzuordnen,
wobei der Basisabschnitt (7) einen Durchgang (7.3) für den Spiralschlauch (2) zum Ankuppeln des Spiralschlauchs (2) an einen Wasserhahn aufweist, wobei der Durchgang (7.3) so angepasst ist, dass der Spiralschlauch (2) oder ein Endabschnitt des Spiralschlauchs (2) seitlich, und zwar radial aus dem Basisabschnitt (7) herausragt,
**dadurch gekennzeichnet, dass**
der Basisabschnitt (7) mit dem unteren Grundkörperabschnitt (3.2) mittels eines elastisch verformbaren Kopplungselements (6) gekoppelt ist.

2. Schlauchkasten nach Anspruch 1, wobei die Befestigungsmittel (4) einen elastischen Befestigungsabschnitt (5), der eine flexible Kopplung des Grundkörpers (3) mit einem Befestigungsbereich bereitstellt, umfassen.

3. Schlauchkasten nach Anspruch 2, wobei der elastische Befestigungsabschnitt (5) einen Durchgang für den Spiralschlauch (2) bereitstellt.

4. Schlauchkasten nach Anspruch 2 oder 3, wobei der elastische Befestigungsabschnitt (5) ein elastisch verformbares Kopplungselements (6) umfasst.

5. Schlauchkasten nach Anspruch 4, **dadurch gekennzeichnet, dass** der Basisabschnitt (7) mittels des elastisch verformbaren Kopplungselements (6) mit dem unteren Grundkörperabschnitt (3.2) gekoppelt ist.

6. Schlauchkasten nach einem der vorhergehenden Ansprüche 3 bis 5, **dadurch gekennzeichnet, dass** der untere Grundkörperabschnitt (3.2) einen Gewinde (3.2.1) aufweist, der zur Aufnahme der Schlaufen einer Feder (6) des elastischen Befestigungsabschnitts (5) geeignet ist.

7. Schlauchkasten nach einem der Ansprüche 4 oder 6, wobei der Basisabschnitt (7) einen Kopplungsabschnitt (7.1) zum Verbinden des Basisabschnitts (7) mit dem elastisch verformbaren Kopplungselement (6) umfasst.

8. Schlauchkasten nach Anspruch 7, wobei der Kopplungsabschnitt (7.1) ein Gewinde (7.1.1) zur Aufnahme der Schlaufen einer Feder des elastischen Befestigungsabschnitts (5) aufweist.

9. Schlauchkasten nach einem der vorhergehenden Ansprüche, **dadurch gekennzeichnet, dass** der Basisabschnitt (7) mit einem Ankerelement (8), insbesondere einem Bodenanker oder einem Spike lösbar verbindbar ist.

10. Schlauchkasten nach einem der Ansprüche 2 bis 9, **dadurch gekennzeichnet, dass** der elastische Befestigungsabschnitt (5) Rückstellkräfte aufweist, so dass bei fehlender äußerer Krafteinwirkung die Längsachse (LA) des Grundkörpers (3) in vertikaler oder im Wesentlichen vertikaler Richtung angeordnet ist.

11. Schlauchkasten nach einem der Ansprüche 2 bis 10, **dadurch gekennzeichnet, dass** der elastische Befestigungsabschnitt (5) Rückstellkräfte aufweist, so dass beim Herausziehen des Spiralschlauches (2) aus dem Grundkörper (3) die Längsachse (LA) des Grundkörpers (3) in eine gekippte Position oder in eine horizontale oder im Wesentlichen horizontale Position verschoben wird.

12. Schlauchkasten nach einem der vorhergehenden Ansprüche, **dadurch gekennzeichnet, dass** die Höhe (h) des Grundkörpers (3) in einer Richtung parallel zur Längsachse (LA) größer, nämlich mindestens zwei- oder dreimal größer als die Abmessung des Grundkörpers (3) quer zur Längsachse (LA) ist.

13. Schlauchkasten nach einem der vorhergehenden Ansprüche, wobei am Basisabschnitt (7) ein Schlauchanschluss zum Verbinden des Spiralschlauchs (2) mit dem Wasserhahn vorgesehen ist.

## Revendications

1. Boîte à tuyau conçue pour recevoir un tuyau en spirale (2), la boîte à tuyau comprenant :
un corps de base (3), spécifiquement un corps de base tubulaire, et délimitant une cavité (3.1) pour recevoir le tuyau en spirale (2) et comprenant une partie inférieure de corps de base (3.2) fournissant un support pour le tuyau en spirale (2) reçu dans le corps de base (3), la partie inférieure de corps de base (3.2) comprenant un passage (3.3) pour le tuyau en spirale (2) ; et
des moyens de fixation (4) conçus pour fixer la boîte à tuyau au-dessus du sol comprenant une partie de base (7) fixant la boîte à tuyau au niveau d'une zone de fixation, dans laquelle la partie de base (7) comprend des ouvertures (7.2) pour recevoir des éléments de fixation afin d'agencer de manière fixe la partie de base (7) au niveau d'une zone de fixation,
moyennant quoi la partie de base (7) comprend un passage (7.3) pour le tuyau en spirale (2) pour coupler le tuyau en spirale (2) à un robinet d'eau, le passage (7.3) étant conçu de telle sorte que le tuyau en spirale (2) ou une partie d'extrémité du tuyau en spirale (2) fait saillie latéralement, spécifiquement radialement, depuis la partie de base (7)
**caractérisée en ce que**
la partie de base (7) est couplée à la partie inférieure du corps de base (3.2) au moyen d'un élément de couplage déformable élastiquement (6).

2. Boîte à tuyau selon la revendication 1, dans laquelle lesdits moyens de fixation (4) comprennent une partie de fixation élastique (5) fournissant un couplage flexible du corps de base (3) avec une zone de fixation.

3. Boîte à tuyau selon la revendication 2, dans laquelle la partie de fixation élastique (5) fournit un passage au tuyau en spirale (2).

4. Boîte à tuyau selon la revendication 2 ou 3, dans laquelle ladite partie de fixation élastique (5) comprend un élément de couplage déformable élastiquement (6).

5. Boîte à tuyau selon la revendication 4, dans laquelle la partie de base (7) est couplée à la partie inférieure du corps de base (3.2) au moyen dudit élément de couplage déformable élastiquement (6).

6. Boîte à tuyau selon l'une quelconque des revendications précédentes 3 à 5, dans laquelle la partie inférieure du corps de base (3.2) comprend un filetage (3.2.1) conçu pour recevoir les boucles d'un ressort (6) de la partie de fixation élastique (5).

7. Boîte à tuyau selon l'une quelconque des revendications 4 ou 6, dans laquelle la partie de base (7) comprend une partie de couplage (7.1) pour coupler la partie de base (7) avec ledit élément de couplage déformable élastiquement (6).

8. Boîte à tuyau selon la revendication 7, dans laquelle la partie de couplage (7.1) comprend un filetage (7.1.1) pour recevoir les boucles d'un ressort de la partie de fixation élastique (5).

9. Boîte à tuyau selon l'une quelconque des revendications précédentes, dans laquelle la partie de base (7) est conçue pour être reliée de manière détachable à un élément d'ancrage (8), spécifiquement une ancre de sol ou un picot.

10. Boîte à tuyau selon l'une quelconque des revendications 2 à 9, dans laquelle la partie de fixation élastique (5) comprend des forces de rappel telles que, dans le cas où aucune force externe n'est appliquée, l'axe longitudinal (LA) du corps de base (3) est disposé dans une direction verticale ou essentiellement verticale.

11. Boîte à tuyau selon l'une quelconque des revendications 2 à 10, dans laquelle la partie de fixation élastique (5) comprend des forces de rappel telles qu'en cas de traction du tuyau en spirale (2) hors du corps de base (3), l'axe longitudinal (LA) du corps de base (3) est déplacé dans une position inclinée ou dans une position horizontale ou essentiellement horizontale.

12. Boîte à tuyau selon l'une quelconque des revendications précédentes, dans laquelle la hauteur (h) du corps de base (3) dans une direction parallèle à l'axe longitudinal (LA) est supérieure, spécifiquement au moins deux ou trois fois supérieure à la dimension du corps de base (3) transversalement à l'axe longitudinal (LA).

13. Boîte à tuyau selon l'une quelconque des revendications précédentes, dans laquelle un connecteur de tuyau est prévu au niveau de la partie de base (7) pour coupler le tuyau en spirale (2) avec le robinet d'eau.
